Europäisches Patentamt

European Patent Office

Office européen des brevets

(11) Veröffentlichungsnummer: **0 166 338**
**B1**

(12) **EUROPÄISCHE PATENTSCHRIFT**

(45) Veröffentlichungstag der Patentschrift:
**07.12.88**

(51) Int. Cl.⁴: **G 10 K 11/00, F 16 M 11/12**

(21) Anmeldenummer: **85107433.6**

(22) Anmeldetag: **14.06.85**

(54) Elektronisches, berührungslos arbeitendes Schaltgerät.

(30) Priorität: 20.06.84 DE 3422859
13.06.85 DE 3521299

(43) Veröffentlichungstag der Anmeldung:
02.01.86 Patentblatt 86/1

(45) Bekanntmachung des Hinweises auf die Patenterteilung:
07.12.88 Patentblatt 88/49

(84) Benannte Vertragsstaaten:
AT CH DE FR IT LI NL

(56) Entgegenhaltungen:
DE-C- 807 720
FR-A- 1 123 300
FR-A- 1 542 416
FR-A- 2 278 206
GB-A- 2 047 323

(73) Patentinhaber: **Siemens Aktiengesellschaft Berlin und München, Wittelsbacherplatz 2, D-8000 München 2 (DE)**

(72) Erfinder: **Podszus, Werner, Rotweg 4, D-8551 Weissenohe (DE)**
Erfinder: **Ritthammer, Günter, Wichernstrasse 48, D-8450 Amberg (DE)**

## Beschreibung

Die Erfindung bezieht sich auf ein elektronisches, berührungslos arbeitendes Schaltgerät, insbesondere mit Ultraschallsensor, mit einem die Elektronik und die Befestigungsmittel aufnehmenden Grundgerät und mit diesem elektrisch über eine Anschlussleitung und mechanisch über ein Halterungsteil in unterschiedlichen Stellungen verbindbaren Aufnahmeteil.

Bei bekannten Schaltgeräten der obengenannten Art (DE-AS 2 724 939, DE-GM 7 344 278, DE-OS 2 433 047) ist das Aufnahmeteil, das mit der Elektronik über eine Anschlussleitung verbunden ist, in eine Öffnung oder an Halterungsteile des Grundgerätes eingeschoben, so dass sich im allgemeinen maximal fünf zueinander im Winkel von 90° stehende Ansprechflächen ergeben. Eine Feinausrichtung ist lediglich durch entsprechende Montage des gesamten Grundgerätes möglich. Der vorliegenden Erfindung liegt die Aufgabe zugrunde, ein Schaltgerät der obengenannten Art dahingehend zu verbessern, dass es auf besonders einfache Weise ohne grossen konstruktiven Aufwand mit dem Aufnahmeteil in beliebige Ansprechrichtungen bringbar ist. Dies wird auf einfache Weise dadurch erreicht, dass das Halterungsteil rohrförmig ausgebildet ist und von einer Rohrschelle umgriffen ist und dass zwischen den Schellenenden ein Halterungsansatz des Aufnahmeteiles als Flachteil mit halbkreisförmiger Endkontur über eine Spannschraube drehbar geführt und nach deren Anziehen gehalten ist, wobei die Nachfederung der Schellenenden sowohl eine Halterung des Halterungsansatzes als auch der Rohrschelle auf dem Halterungsteil gewährleistet.

Eine derartige Anordnung hat sich insbesondere bei Ultraschall-Näherungsschaltern bewährt. Das Lösen des Aufnahmeteiles zum Justieren und auch das Verspannen nach dem Justieren in beliebiger Richtung ist mit nur einer Spannschraube möglich. Eine relativ sichere Führung der Anschlussleitung ergibt sich, wenn in den Halterungsansatz an seiner halbkreisförmigen Endkontur eine Nut mit halbkreisförmiger Kontur eingebracht ist. Ein weiterer Schutz für die Anschlussleitung wird erreicht, wenn das rohrförmige Halterungsteil von einer Schellenverbreiterung mit kegelstumpfförmiger Ausnehmung überragt ist. Um ein Abscheren der Anschlussleitung beim Verdrehen des Aufnahmeteiles zu verhindern ist es vorteilhaft, wenn das rohrförmige Halterungsteil mit einer Anschlagnase die Rohrschelle überragt. Das Abnehmen des Aufnahmeteiles mitsamt der Schelle vom rohrförmigen Halterungsteil wird in keiner Weise durch die Anschlagnase nachteilig beeinflusst, wenn die Breite der Anschlagnase dem Abstand der Schellenenden entspricht. Hier ist auch eine einfache Montage möglich. Um ein Verstellen des Aufnahmeteiles bei Erschütterungen in jedem Fall vermeiden zu können ist es weiterhin vorteilhaft, wenn der Halterungsansatz und zumindest ein Schellenende mit einer Zahnrastung versehen ist. Um die Halterung für das Aufnahmeteil universell verwendbar zu machen ist es weiterhin vorteilhaft, wenn das rohrförmige Halterungsteil an einen Flansch angeformt ist. Da die eine Seite der Anschlussleitungen allgemein mit dem Ultraschallsensor eingegossen ist, kann eine Abdichtung des anderen Endes der Anschlussleitung, insbesondere bei abnehmbarem Flansch, auf einfache Weise dadurch erreicht werden, dass im Rohr des rohrförmigen Halterungsteiles Rastnasen zur Halterung eines Dichtringes für die Anschlussleitung vorgesehen sind.

Die Klemmwirkung der Schelle gegenüber dem Gehäuse und dem Sensorkopf lässt sich verbessern, wenn das Halterungsteil eine keilförmige Ringnut aufweist, in die eine daran angepasste, im Innern der Rohrschelle angeordnete, keilförmige Anformung eingreift. Um die durch die Spannschraube aufgewandte Kraft voll als Klemmkraft zur Verfügung zu haben und damit die Biegekraft der üblichen Rohrschelle auszuschalten, ist es vorteilhaft, wenn die Rohrschelle an der der Klemmseite gegenüberliegenden Seite zweigeteilt ist und die Teile miteinander verbindbar sind. Eine einfache Ausführung hierfür ergibt sich, wenn die Verbindung aus quer zur Spannrichtung der Rohrschelle in einem Teil verlaufenden, in angepasste Ausnehmungen des anderen Teils einführbaren Drehzapfen bestehen. Um auch den Festsitz zwischen Halterungsansatz und Rohrschelle zu verbessern ist es vorteilhaft, wenn die mit dem Halterungsansatz zusammenwirkenden Flächen der Schellenenden eine kreisringförmige Nut und der Halterungsansatz einen kreisringförmigen Vorsprung aufweisen, die konzentrisch zur Achse der Spannschraube liegen. Mit einer derartigen Ausführung des Schaltgerätes kann das Aufnahmeteil in beliebige Ansprechrichtungen gebracht werden, wobei der geforderte Rütteltest in bezug auf den Festsitz in allen Fällen bestanden wurde.

Anhand der Zeichnung wird ein Ausführungsbeispiel gemäss der Erfindung beschrieben und die Wirkungsweise näher erläutert. Es zeigen:

Fig. 1 den Gesamtaufbau des elektronischen Schaltgerätes in Seitenansicht,

Fig. 2 das Schaltgerät nach Fig. 1 in Vorderansicht,

Fig. 3 die Befestigung des Aufnahmeteiles an einem Flansch mit rohrförmigem Halterungsteil,

Fig. 4 eine Schnittdarstellung durch den Flansch in Seitenansicht,

Fig. 5 eine Draufsicht auf den Flansch,

Fig. 6 eine Draufsicht auf die Rohrschelle,

Fig. 7 und 8 Seitenansicht und Draufsicht, zum Teil im Schnitt, des Aufnahmeteiles mit dem Halterungsansatz,

Fig. 9, 10 und 11 Vorderansicht, Seitenansicht und Draufsicht auf das Aufnahmeteil mit Halterungsansatz mit kreisringförmigem Vorsprung,

Fig. 12 eine Schnittdarstellung gemäss der Linie XII-XII nach Fig. 9,

Fig. 13, 14 und 15 Vorderansicht, Seitenansicht und Draufsicht auf die Rohrschelle mit keilförmiger Anformung,

Fig. 16 eine Schnittdarstellung gemäss der Linie XVI-XVI nach Fig. 13,

Fig. 17 eine Schnittdarstellung gemäss der Linie XVII-XVII nach Fig. 13,

Fig. 18 eine Draufsicht auf das Schaltgerät mit einem Halterungsteil mit Ringnut für die Rohrschelle nach den Fig. 13 bis 15 und

Fig. 19 die Anordnung eines Anschlagnockens für die Drehbegrenzung am Halterungsteil.

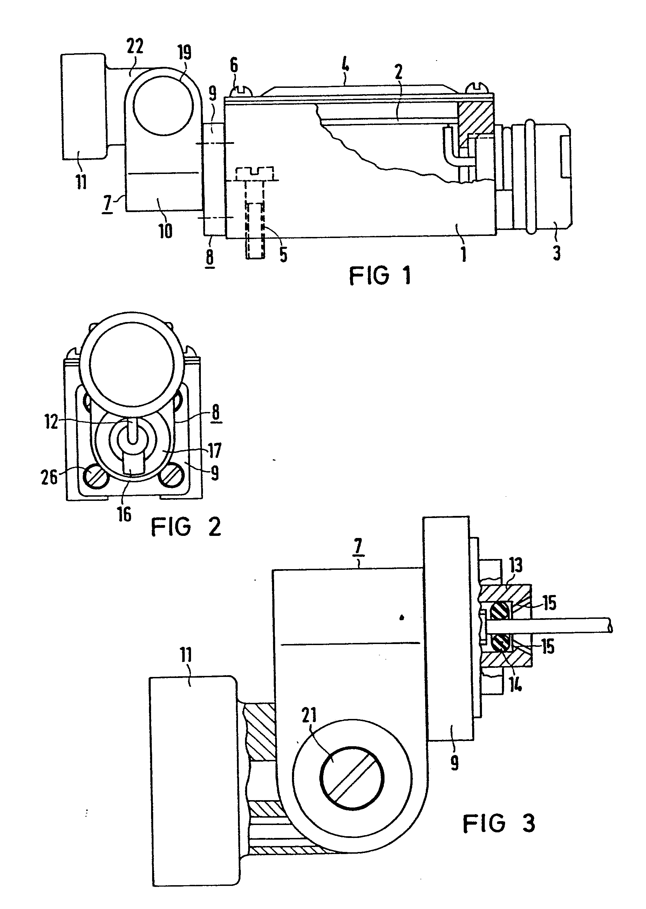

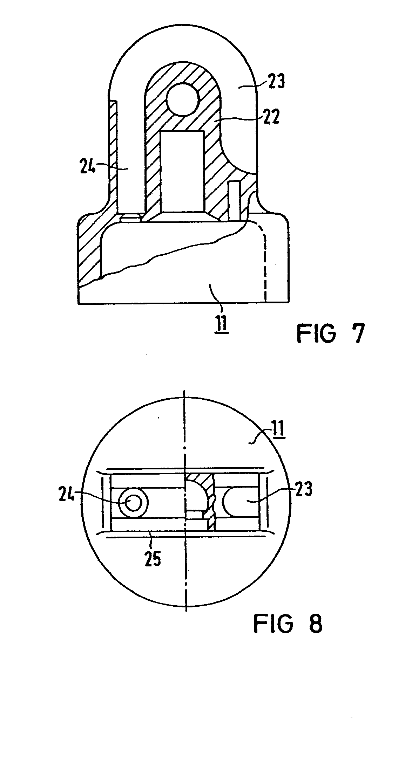

Das in der Zeichnung dargestellte Schaltgerät besteht aus dem Grundgerät 1, in dem die elektronischen Bauelemente 2 untergebracht sind. Der Anschluss des Grundgerätes 1 erfolgt über die Kabeleinführungen 3. Die Befestigung des Schaltgerätes an der Montageplatte erfolgt über nach Abnehmen des Deckteiles 4 zugängliche, gestrichelt dargestellte Befestigungsschrauben 5. Das Deckteil 4 ist mit Schrauben 6 gehalten. Mit dem Grundgerät 1 ist der Aufnahmekopf 7, der aus dem rohrförmigen Halterungsteil 8 mit dem Flansch 9, der Rohrschelle 10 sowie dem den Ultraschallsensor aufnehmenden Aufnahmeteil 11 besteht, verbunden. Die Verbindung zwischen Grundgerät 1 und Ultraschallsensor erfolgt über eine Anschlussleitung 12. Die Anschlussleitung ist durch das Rohr 13 des rohrförmigen Halterungsteiles 8 hindurchgeführt. Zur Abdichtung dient ein die Anschlussleitung umgreifender O-Ring 14, der durch Rastnasen 15 im Inneren des Rohres abdichtend gehalten wird. Das Rohr 13 ist mit dem Flansch 9 einstückig hergestellt. An der dem Flansch abgewandten Seite ist es mit einer Anschlagnase 16 ausgestattet, die nach Auffügen der Rohrschelle 10 in eine kegelstumpfförmige Ausnehmung 17 der Rohrschelle ragt. Die Breite der Rohrschelle entspricht der mit 18 bezeichneten Länge des Rohres 13, so dass die Anschlagnase innerhalb der Schelle selbst läuft. Die Anschlagnase 16 verhindert im Normalbetrieb ein Abziehen der Rohrschelle 10 vom Rohr 13. Zwischen den Schellenenden 19 und 20 ist über eine Schraube 21 ein Halterungsansatz 22 des Aufnahmeteils 11 schwenkbar geführt. Das Aufnahmeteil hat, wie Fig. 7 zeigt, an der dem eigentlichen Sensor abgelegenen Seite halbkreisförmige Gestalt, so dass ein Verschwenken um die Achse der Schraube 21 ohne Schwierigkeiten möglich ist. Der Halterungsansatz ist mit einer halbkreisförmigen Nut 23 an seinen schmalen Seitenwänden versehen, die in einer Bohrung 24 ausläuft, durch die die Anschlussleitung 12 hindurchgeführt ist. Die Anschlussleitung liegt somit geschützt in der Nut 23 des Aufnahmeteiles und geht, wie die Fig. 2 zeigt, in das Innere des Rohres 13 über. Die Anschlagnase 16 verhindert ein Überdrehen des Aufnahmeteiles. Dadurch, dass die Anschlagnase in ihrer Breite kleiner ist als der Abstand der Schellenenden 19 und 20, ist eine einfache Montage der Schelle und auch ein Abnehmen des Kopfes ohne Schwierigkeiten möglich. Zumindest eine Seitenfläche des Halterungsansatzes 22 kann mit einer Zahnrastung oder Riffelung 25 versehen werden, so dass das Aufnahmeteil 11 um jeweils bestimmte Winkelgrade verstellbar ist. Die Form und Elastizität der Schelle 10 ist so vorgesehen, dass bei Anziehen der Schraube 21 sowohl eine genügende Haftung der Schelle am Rohr 13 als auch eine genügende Haftung des Halterungsansatzes 22 zwischen den Schellenenden vorhanden ist.

Es ist somit durch Lösen von lediglich einer Schraube eine genaue Einstellung des Ultraschallsensors möglich, ohne hierbei die Befestigung des Grundgerätes an der Befestigungsplatte ändern zu müssen. Dadurch, dass der gesamte Aufnahmekopf 7 über Schrauben 26 über den Flansch 8 am Grundgerät 1 befestigt ist, ist der gesamte Aufnahmekopf 7 vielseitig verwendbar, so dass gegebenenfalls der Aufnahmekopf auch getrennt vom Grundgerät befestigt werden kann und über die Anschlussleitung mit dem Grundgerät verbindbar ist.

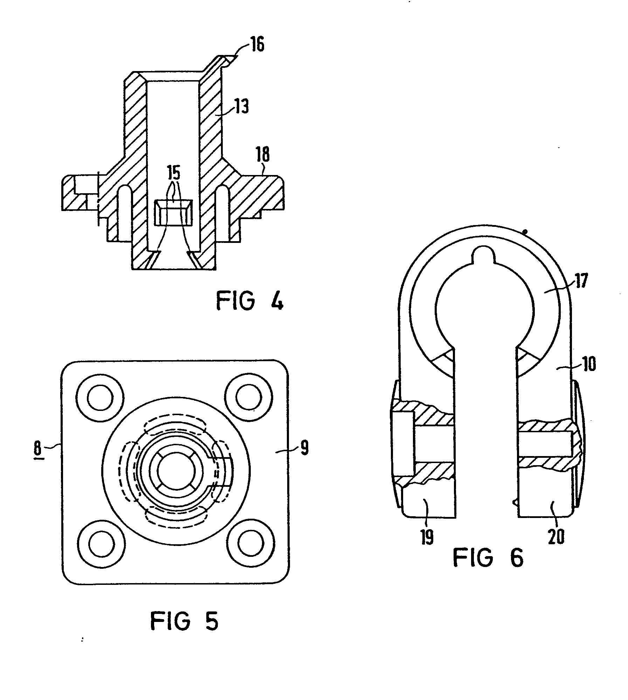

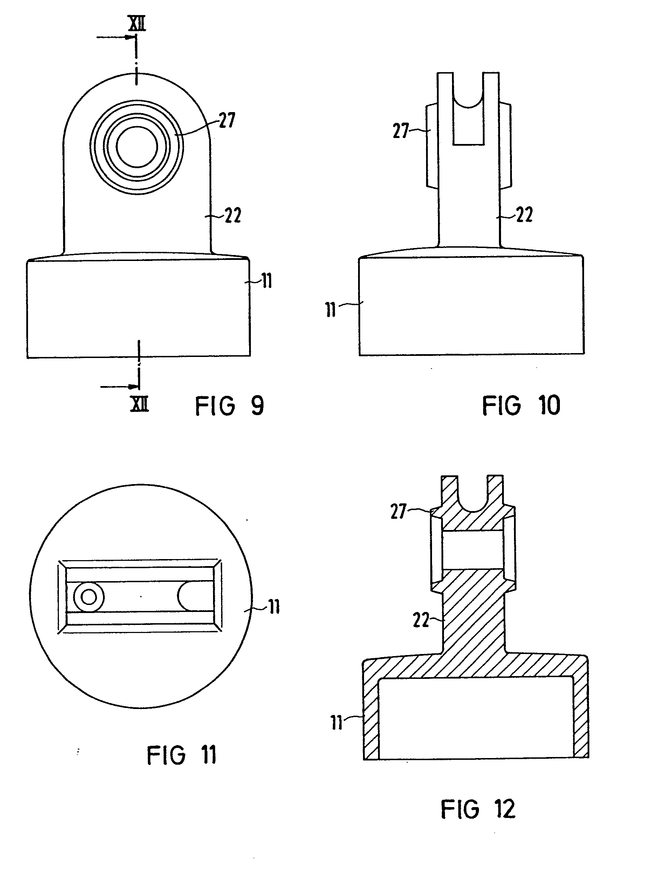

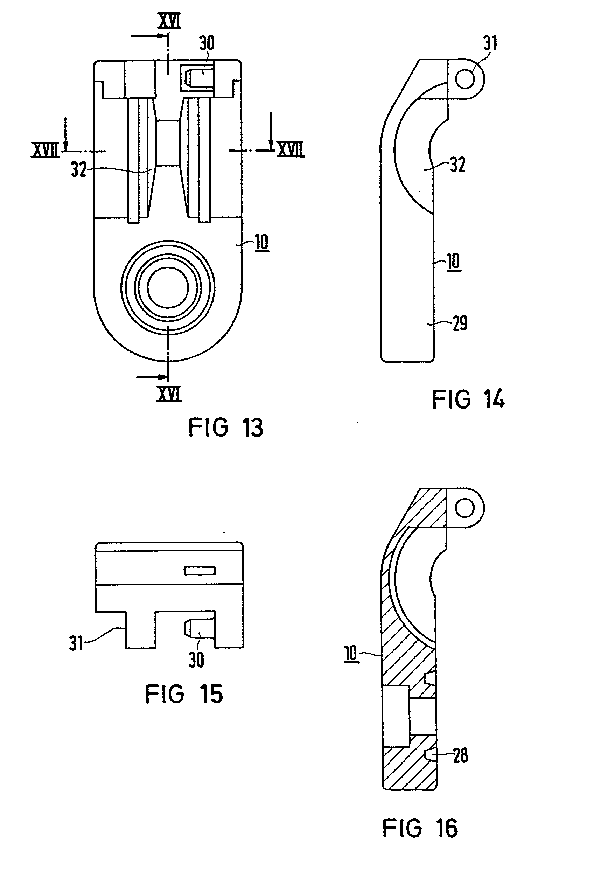

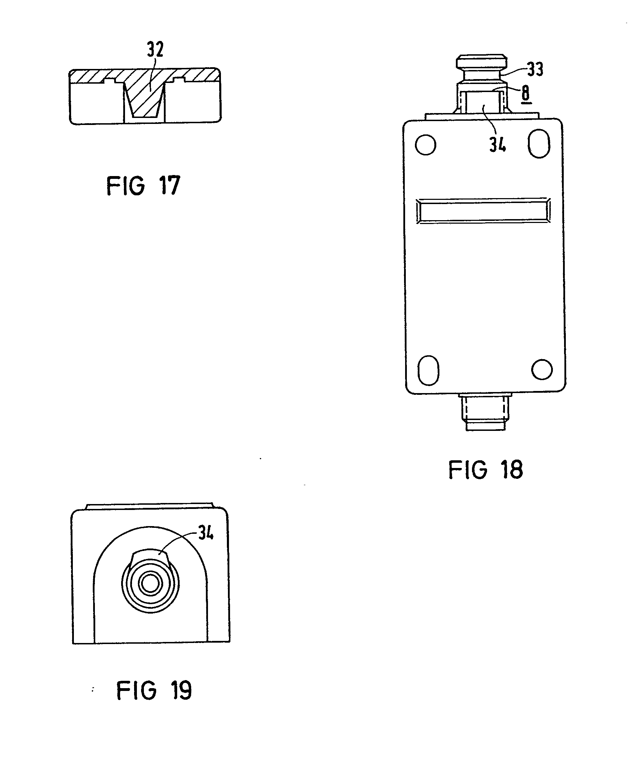

Aus den Fig. 9 bis 18 ist eine Weiterbildung des Schaltgerätes nach den Fig. 1 bis 8 zu entnehmen. Das in den Fig. 9 bis 11 dargestellte Aufnahmeteil 11 hat am Halterungsansatz 22 einen kreisringförmigen Vorsprung 27. Der Vorsprung 27 hat, wie Fig. 12 zeigt, trapezförmigen Querschnitt. Der kreisringförmige Vorsprung 27 ist einer kreisringförmigen Nut 28 in der Rohrschelle 11 angepasst, und zwar derart, dass die Seitenflächen des Trapezes unterschiedliche Neigung haben, so dass eine Klemmwirkung zwischen Rohrschelle 11 und Halterungsansatz 22 beim Festklemmen der Schraube 21 entsteht. Die Rohrschelle 11 besteht aus zwei gleichen Teilen 29. An der der Klemmstelle der Schraube 21 gegenüberliegenden Seite sind die Teile 29 über Drehzapfen 30, die in angepasste Ausnehmungen 31 des anderen Teiles eingeschoben werden, miteinander verbunden. Die Drehzapfen 30 verlaufen mit ihrer Achse quer zur Spannrichtung der Rohrschelle 11, so dass sie ohne Schwierigkeiten durch Querverschiebungen der Teile 29 gegeneinander in Eingriff mit den Ausnehmungen 31 gebracht werden können und so ein Drehgelenk bilden. Auch die Schelle 11 hat keil- oder kegelförmige Anformungen 32, die beim Schliessen der Schelle in eine keilförmige Ringnut 33 – siehe Fig. 18 – am rohrförmigen Halterungsteil 8 eingreifen. Die keilförmigen Anformungen 32 am Aufnahmeteil 11 haben im Ausführungsbeispiel, ähnlich wie der kreisringförmige Vorsprung 27, trapezförmigen Querschnitt, so dass sich ein Doppelkeil ergibt. Die Neigung der Keilflächen der keilförmigen Anformung 32 im Verhältnis zur keilförmigen Ringnut 33 sind so gewählt, dass auch hier eine gute Verklemmung zwischen Rohrschelle 11 und rohrförmigem Halterungsteil 8 beim Anziehen der Spannschraube 21 erreichbar ist. Durch das Eingreifen der keilförmigen Anformungen 32 in die keilförmige Ringnut 33 ist ein Verschieben auf dem rohrförmigen Halterungsteil 8 in axialer Richtung nicht möglich. Die keilförmigen Anformungen 32 an der Innenwandung der Rohrschellenteile 29 ragen nur geringfügig in die keilförmige Ringnut 33 ein, so dass sich neben den Anformungen ein Freiraum zwischen Innenwandung der Rohrschelle und der Aussenwand des rohrförmigen Halterungsteiles 8 ergibt. In diesen Zwischenraum ragt ein am Halterungsteil angeformter Nocken 34, der mit den Verbindungsteilen – Drehzapfen 30 und Ausnehmung 31 – zwischen den Rohrschellenteilen 29 als Anschlag dient, so dass ein Schwenkwinkel der Rohrschelle von ≧180° gegeben ist. Durch diese konstruktive Lösung wird eine Beschädigung der Anschlussleitung 12 verhindert.

**Patentansprüche**

1. Elektronisches, berührungslos arbeitendes Schaltgerät, insbesondere mit Ultraschallsensor mit einem die Elektronik und die Befestigungsmittel aufnehmenden Grundgerät und mit diesem elektrisch über eine Anschlussleitung und mechanisch über ein Halterungsteil in unterschiedlichen Stellungen verbindbaren Aufnahmeteil, dadurch gekennzeichnet, dass das Halterungsteil (8) rohrförmig ausgebildet ist und von einer Rohrschelle (10) umgriffen ist und dass zwischen den Schellenenden (19, 20) ein Halterungsansatz (22) des Aufnahmeteiles (11) als Flachteil mit halbkreisförmiger Endkontur über eine Spannschraube (21) drehbar geführt und nach deren Anziehen gehalten ist, wobei die Nachfederung der Schellenenden (19, 20) sowohl eine Halterung des Halterungsansatzes (22) als auch der Rohrschelle (10) auf dem Halterungsteil (8) gewährleistet.

2. Schaltgerät nach Anspruch 1, dadurch gekennzeichnet, dass in den Halterungsansatz (22) an seiner halbkreisförmigen Endkontur eine Nut (23) mit halbkreisförmiger Kontur eingebracht ist.

3. Schaltgerät nach Anspruch 1, dadurch gekennzeichnet, dass das rohrförmige Halterungsteil (8) von einer Schellenverbreiterung mit kegelstumpfförmiger Ausnehmung (17) überragt ist.

4. Schaltgerät nach einem der vorhergehenden Ansprüche, dadurch gekennzeichnet, dass das rohrförmige Halterungsteil (8) mit einer Anschlagnase (16) die Rohrschelle überragt.

5. Schaltgerät nach Anspruch 4, dadurch gekennzeichnet, dass die Breite der Anschlagnase (16) dem Abstand der Schellenenden (19, 20) entspricht.

6. Schaltgerät nach einem der vorhergehenden Ansprüche, dadurch gekennzeichnet, dass der Halterungsansatz (22) und zumindest ein Schellenende (19, 20) mit einer Zahnrastung (25) versehen ist.

7. Schaltgerät nach einem der vorhergehenden Ansprüche, dadurch gekennzeichnet, dass das rohrförmige Halterungsteil (8) an einem Flansch (9) angeformt ist.

8. Schaltgerät nach einem der vorhergehenden Ansprüche, dadurch gekennzeichnet, dass im Rohr des rohrförmigen Halterungsteiles (8) Rastnasen (15) zur Halterung eines Dichtringes für die Anschlussleitung vorgesehen sind.

9. Schaltgerät nach einem der vorhergehenden Ansprüche, dadurch gekennzeichnet, dass das Halterungsteil (8) eine keilförmige Ringnut (33) aufweist, in die eine daran angepasste, im Innern der Rohrschelle (10) angeordnete keilförmige Anformung (32) eingreift.

10. Schaltgerät nach einem der vorhergehenden Ansprüche, dadurch gekennzeichnet, dass die Rohrschelle (10) an der der Klemmseite (21) gegenüberliegenden Seite zweigeteilt ist und die Teile (29) miteinander verbindbar (30, 31) sind.

11. Schaltgerät nach Anspruch 10, dadurch gekennzeichnet, dass die Verbindung aus quer zur Spannrichtung der Rohrschelle (10) in einem Teil (29) verlaufenden, in angepasste Ausnehmungen (31) des anderen Teils (29) einführbaren Drehzapfen (30) bestehen.

12. Schaltgerät nach einem der vorhergehenden Ansprüche; dadurch gekennzeichnet, dass die mit dem Halterungsansatz (22) zusammenwirkenden Flächen der Schellenenden (19, 20) eine kreisringförmige Nut (28) und der Halterungsansatz (22) einen kreisringförmigen Vorsprung (27) aufweisen, die konzentrisch zur Achse der Spannschraube (21) liegen.

13. Schaltgerät nach einem der vorhergehenden Ansprüche 1 bis 2 und 6 bis 12, dadurch gekennzeichnet, dass das Halterungsteil (8) ausserhalb der Ringnut einen Nocken (34) aufweist, der mit Anformungen an der Innenwandung der Rohrschelle als Anschlag in Wirkverbindung bringbar ist, wobei die Höhe des Nockens (34) kleiner als die Höhe der keilförmigen Anformung (32) ist.

14. Schaltgerät nach Anspruch 5, dadurch gekennzeichnet, dass die Anformungen durch die Verbindung (30, 31) der beiden Rohrschellenteile (29) gebildet sind.

**Claims**

1. An electronic, contactless switching device, in particular with an ultrasound sensor having a basic unit accommodating the electronics and the securing means and a receiving part which can be joined to the said unit electrically by means of a connecting lead and mechanically in different positions by means of a supporting part, characterised in that the supporting part (8) is tubular and is clasped by a pipe clamp (10) and that between the ends (19, 20) of the clamp a supporting extension of the receiving part (11), formed as a flat part with a semi-circular end contour, is rotatably guided by means of a clamping screw (21) and held by it after it has been tightened, whereby the resilience of the clamp ends (19, 20) ensures that both the supporting extension (22) and the pipe clamp (10) are held in position on the supporting part (8).

2. A switching device according to claim 1, characterised in that a slot (23) with a semi-circular contour is formed in the supporting extension (22) at its end having a semi-circular contour.

3. A switching device according to claim 1, characterised in that the tubular supporting part (8) is overlapped by a widened part of the clamp having a truncated cone-shaped recess (17).

4. A switching device according to any one of the preceding claims, characterised in that the tubular supporting part (8) overlaps the pipe clamp with a stop dog (16).

5. A switching device according to claim 4, characterised in that the width of the stop dog (16) corresponds to the distance between the clamp ends (19, 20).

6. A switching device according to any one of the preceding claims, characterised in that the supporting extension (22) and at least one clamp end (19, 20) is provided with a toothed groove (25).

7. A switching device according to any one of the preceding claims, characterised in that the tubular supporting part (8) is formed on a flange (9).

8. A switching device according to any one of the preceding claims, characterised in that in the tube of the tubular supporting part (8) latches (15) are provided to hold a sealing ring for the connecting line.

9. A switching device according to any one of the preceding claims, characterised in that the supporting part (8) has a wedge-shaped annular slot (33) in which a matching wedge-shaped extension (32) arranged in the inside of the pipe clamp (10) engages.

10. A switching device according to any one of the preceding claims, characterised in that the pipe clamp (10) is divided into two parts on the side opposite the clamping side (21) and the parts (29) can be joined to one another (30, 31).

11. A switching device according to claim 10, characterised in that the connection consists of pivot pins (30) in one part (29) extending transverse to the tightening direction of the pipe clamp (10), which can be inserted into matching recesses (31) in the other part (29).

12. A switching device according to any one of the preceding claims, characterised in that the surfaces of the clamp ends (19, 20) cooperating with the supporting extension (22) have an annular groove (28) and the supporting extension (22) has an annular projection (27) which are concentric with the axis of the clamping screw (21).

13. A switching device according to any one of the preceding claims 1 to 2 and 6 to 12, characterised in that the supporting part (8) has a cam (34) outside of the annular groove which can be brought into operative connection with extensions on the inner wall of the pipe clamp as a stop, the height of the cam (34) being less than the height of the wedge-shaped extension (32).

14. A switching device according to claim 13, characterised in that the extensions are formed by the connection (30, 31) of the two pipe clamp parts (29).

**Revendications**

1. Appareil électronique de commutation, opérant sans contact, comportant notamment un détecteur ultrasonore, un appareil de base logeant le système électronique et les moyens de fixation, et une partie formant logement pouvant être reliée électriquement par l'intermédiaire d'un conducteur de raccordement et mécaniquement par l'intermédiaire d'un organe de retenue à cet appareil, dans des positions différentes, caractérisé par le fait que l'organe de retenue (8) est réalisé sous la forme d'un tube et est entouré par un collier pour tuyaux (10) et qu'un appendice saillant de retenue (22) de la partie formant logement (11), réalisé sous la forme d'un élément plat possédant un contour d'extrémité de forme semi-circulaire, est guidé de manière à pouvoir tourner, par l'intermédiaire d'une vis de serrage (21) et est retenu après le serrage de cette vis, le fléchissement élastique des extrémités (19, 20) du collier garantissant une retenue aussi bien de l'appendice saillant de retenue (22) que, également, du collier pour tuyaux (10) sur l'organe de retenue (8).

2. Appareil de commutation suivant la revendication 1, caractérisé par le fait qu'une rainure (23) possédant un contour semi-circulaire est ménagée dans l'appendice saillant de retenue (22), au niveau de son contour d'extrémité de forme semi-circulaire.

3. Appareil de commutation selon la revendication 1, caractérisé en ce qu'une partie élargie du collier possédant un évidement de forme tronconique (17) fait saillie au-delà de l'organe de retenue tubulaire (8).

4. Appareil de commutation suivant l'une des revendications précédentes, caractérisé par le fait que l'organe de retenue tubulaire (8) fait saillie par un ergot de butée (16) par-dessus le collier pour tuyaux.

5. Appareil de commutation suivant la revendication 4, caractérisé par le fait que la largeur de l'ergot de butée (16) correspond à la distance entre les extrémités (19, 20) du collier.

6. Appareil de commutation suivant l'une des revendications précédentes, caractérisé par le fait que l'appendice saillant de retenue (22) et au moins une extrémité (19, 20) du collier sont équipés d'un système de crantage denté (25).

7. Appareil de commutation suivant l'une des revendications précédentes, caractérisé par le fait que l'organe de retenue tubulaire (8) est formé par façonnage sur une bride (9).

8. Appareil de commutation suivant l'une des revendications précédentes, caractérisé par le fait que des becs d'encliquetage (15) servant à retenir une bague d'étanchéité pour le conducteur de raccordement sont prévus dans le tube de l'organe de retenue tubulaire (8).

9. Appareil de commutation suivant l'une des revendications précédentes, caractérisé par le fait que l'organe de retenue (8) possède une gorge annulaire en forme de coin (33), dans laquelle s'engage une moulure en forme de coin (32) adaptée à cette gorge et disposée à l'intérieur du collier pour tuyaux (10).

10. Appareil de commutation suivant l'une des revendications précédentes, caractérisé par le fait que le collier pour tuyaux (10) est subdivisé en deux éléments au niveau de son côté situé à l'opposé du côté de serrage (21) et que les deux éléments (29) peuvent être reliés entre eux (30, 31).

11. Appareil de commutation suivant la revendication 10, caractérisé par le fait que le système de liaison est formé par une broche (30) qui s'étend transversalement par rapport à la direction de serrage du collier pour tuyaux (10) dans un élément (29) et peut être insérée dans des évidements adaptés (31) de l'autre élément (29).

12. Appareil de commutation suivant l'une des revendications précédentes, caractérisé par le fait que les surfaces, qui coopèrent avec l'appendice saillant de retenue (22), des extrémités (19, 20) du collier possèdent une gorge (28) en forme d'anneau circulaire et que l'appendice saillant de retenue (22) possède une partie saillante (27) en forme d'anneau circulaire, la gorge et la partie saillante étant concentriques à l'axe de la vis de serrage (21).

13. Appareil de commutation suivant l'une des revendications précédentes 1 à 2 et 6 à 12, caractérisé par le fait que l'organe de retenue (8) comporte, à l'extérieur de la gorge annulaire, une came (34) qui peut être amenée en coopération avec des moulures situées sur la paroi intérieure du collier pour tuyaux et formant butée, la hauteur de la came (34) étant inférieure à la hauteur de la moulure en forme de coin (32).

14. Appareil de commutation suivant la revendication 13, caractérisé par le fait que les moulures sont formées par le système de liaison (30, 31) des deux éléments (29) du collier pour tuyaux.

FIG 1

FIG 2

FIG 3

FIG 4

FIG 5

FIG 6

FIG 7

FIG 8

XII

27

22

11

XII

FIG 9

27

22

11

FIG 10

11

FIG 11

27

22

11

FIG 12

XVI

30

XVII

XVII

32

10

XVI

FIG 13

31

32

10

29

FIG 14

31

30

FIG 15

10

28

FIG 16

FIG 17

FIG 18

FIG 19